# EUROPÄISCHE PATENTANMELDUNG

(11) **EP 0 878 391 A2**
(43) Veröffentlichungstag der Anmeldung: **18.11.1998**
(21) Anmeldenummer: 98108591.3
(22) Anmeldetag: 12.05.1998
(51) Int. Cl.: B63H 9/10, F16G 11/10

(54) **Längenverstellvorrichtung für Segelboot-Trapeze**

(30) Priorität: 15.05.1997 DE 19720335
(71) Anmelder: Feder, Jörg, 34225 Baunatal (DE)
(72) Erfinder: Feder, Jörg, 34225 Baunatal (DE)
(74) Vertreter: Habbel, Ludwig (Lutz)

(57) **Zusammenfassung**

Bei einer Längenverstellvorrichtung für Segelboot-Trapeze, mit einem am freien Ende des Trapezdrahtes (1) befestigten Haltegriff (3) sowie einer im Bereich des Haltegriffes (3) umgelenkten Trapezseilanordnung (6), an deren einem Endbereich der Trapezring (9) befestigt ist, in den der Haken des vom Segler getragenen Trapezgurtes einhängbar ist und an deren anderem Endbereich ein Gummizug (16) im Sinne einer Verkürzung des ringseitigen Endes der Trapezseilanordnung (6) angreift und mit einer zwei Klemmbacken (7) aufweisenden, über eine Drucktaste (14) zu öffnenden Klemmvorrichtung (7,14) zur Fixierung der eingestellten Länge des Trapezseiles (5), wird vorgeschlagen, daß die Klemmvorrichtung (7,14) am Haltegriff (3) vorgesehen ist, daß die Klemmvorrichtung (7,14) zwei beweglich gelagerte und in Richtung der Schließbewegung federbelastete Klemmbacken (7) aufweist, daß die Drucktaste (14) mit beiden Klemmbacken (7) über Verbindungselemente in Wirkverbindung steht, daß der Haltegriff (3) mittels einer eine Umlenkrolle (4) für das Trapezseil (5) aufweisenden Befestigungsvorrichtung (Öse (2)) am Trapezdraht (1) befestigt ist und daß das Trapezseil (5) vom Gummizug (16) nach oben zur Umlenkrolle (4) und von dort nach unten durch die Klemmbacken (7) der Klemmvorrichtung (7,14) geführt ist und am freien unteren Ende den Trapezring (9) aufweist.

## Beschreibung

Die Erfindung betrifft eine Längenverstellvorrichtung nach dem Oberbegriff des Anspruches 1. Derartige Längenverstellvorrichtungen sind beispielsweise aus der DE-GM 75 06 442 bekannt.

Aus der Zeitschrift 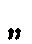 Yacht", September 1987, Heft 19, Seiten 58 bis 62 und 64 ist eine Längenverstellvorrichtung mit einer Tauklemme für Segelboot-Trapeze bekannt.

Aus Heft 10, erschienen im Mai 1992, dergleichen Zeitschrift, Seite 123, ist die Vereinigung eines Handgriffes mit einer Seilklemme bekannt.

Aus der US-PS 46 20 499 und der US-PS 37 65 061 sind schwenkbar gelagerte Klemmbacken bekannt, deren Schwenkbewegung durch geeignete Mittel synchronisiert ist.

Auch die DE-OS 21 48 386 zeigt Klemmbacken, die durch ein Verbindungselement synchronisiert sind, die jedoch nicht als Schwenkelemente, sondern als Schieber ausgestaltet sind.

Bei der gattungsgemäßen Längenverstellvorrichtung ist nachteilig, daß eine vergleichsweise komplizierte Seilführung vorgesehen ist und eine zusätzliche Talje erforderlich ist, die in einem Bereich auf der Bordwand befestigt werden muß, in dem sich vorteilhafterweise der Segler frei bewegen können sollte: beispielsweise, um durch einen Ausfallschritt Bewegungen des Bootes oder Windböen auszugleichen und einen sicheren Stand zu bewahren. Zudem birgt diese Talje die Gefahr, daß sich der Segler aus Unachtsamkeit in ihr verfängt, denn der im Trapez befindliche Segler hat häufig zusätzlich zu dem Gewichtstrimm weitere Aufgaben auszuführen, beispielsweise die Bedienung der Vorschot.

Der Erfindung liegt die Aufgabe zugrunde, eine gattungsgemäße Längenverstellvorrichtung dahingehend zu verbessern, daß eine einfach durchzuführende Betätigung der Längenverstellvorrichtung möglich ist und dem Segler eine möglichst freie Beweglichkeit ermöglicht ist.

Diese der Erfindung zugrundeliegende Aufgabe wird durch eine Längenverstellvorrichtung mit den Merkmalen des Patentanspruches 1 gelöst.

Die Erfindung schlägt mit anderen Worten eine vergleichsweise einfache Führung der Trapezleine vor, so daß keine zweite Talje mit den erwähnten Nachteilen erforderlich ist. Die bekannte Trapeztalje kann bei Verwendung der erfindungsgemäßen Längenverstellvorrichtung durch eine einfache Seilumlenkung ersetzt werden.

Durch Verzicht auf eine flaschenzugartig geführte Trapeztalje kann das freie Ende des Trapezseiles kurz bemessen sein, so daß es nicht über eine große Länge frei hin und her schwingend kann, dementsprechend gut zu erfassen ist und den Segler nicht behindert oder gefährdet. Es kann durch einen Gummizug abgespannt sein, so daß seine Möglichkeit, frei zu schwingen, noch weiter eingeschränkt ist. Hierdurch verbessert sich einerseits die Erreichbarkeit des Trapezseiles als auch die Sicherheit.

Das Trapezseil kann auf einfache Weise an einem Gummizug befestigt sein, der zur Straffung des Trapezes ohnehin bereits am Boot vorhanden ist. Von dort läuft das Trapezseil durch den Haltegriff hindurch und wird im Bereich des Haltegriffs von einer Umlenkrolle wieder in den Griff geführt, wo es durch eine Klemmvorrichtung festgelegt wird. Im weiteren Verlauf endet das Trapezseil in dem Trapezring, in den sich der Segler einhängen kann.

Weitere vorteilhafte Ausgestaltungen der Erfindung sind den Unteransprüchen entnehmbar.

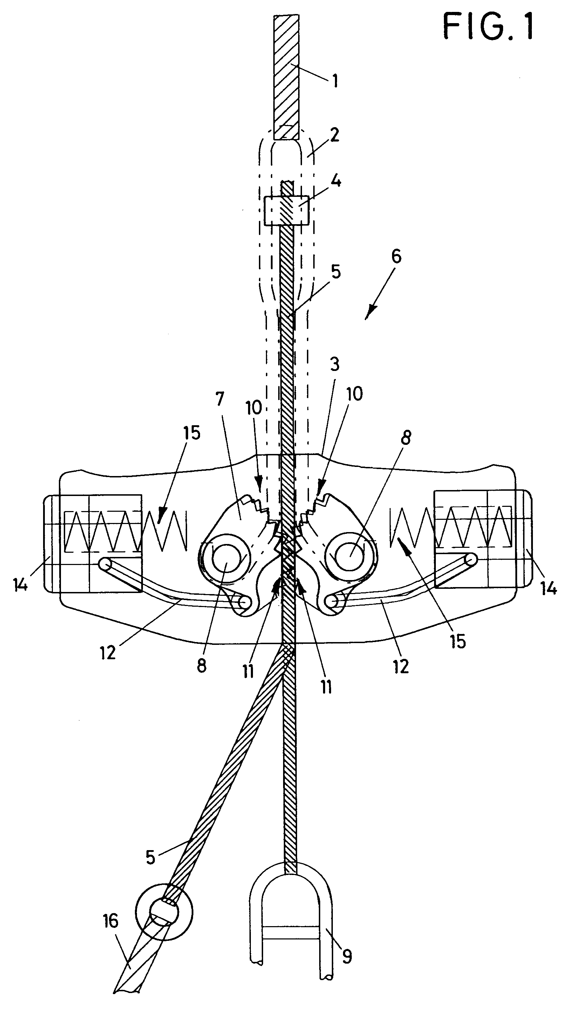

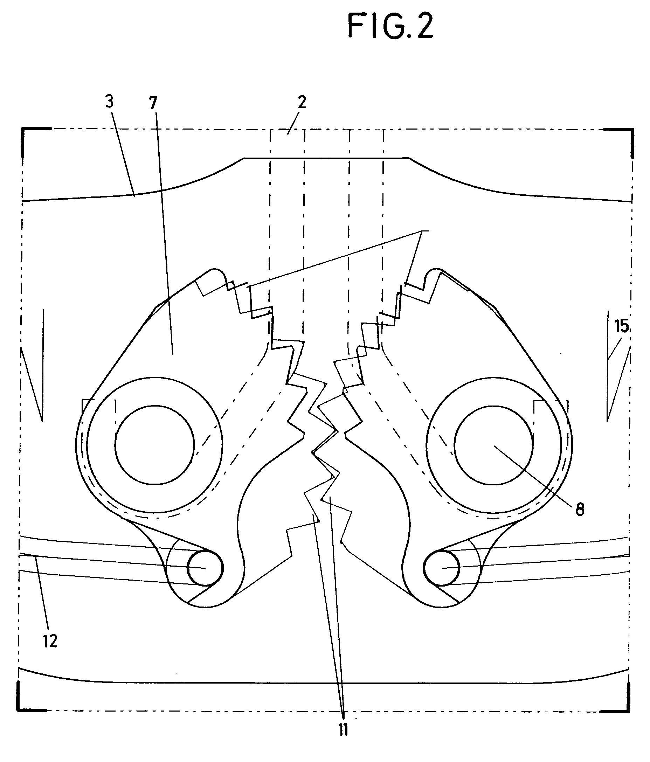

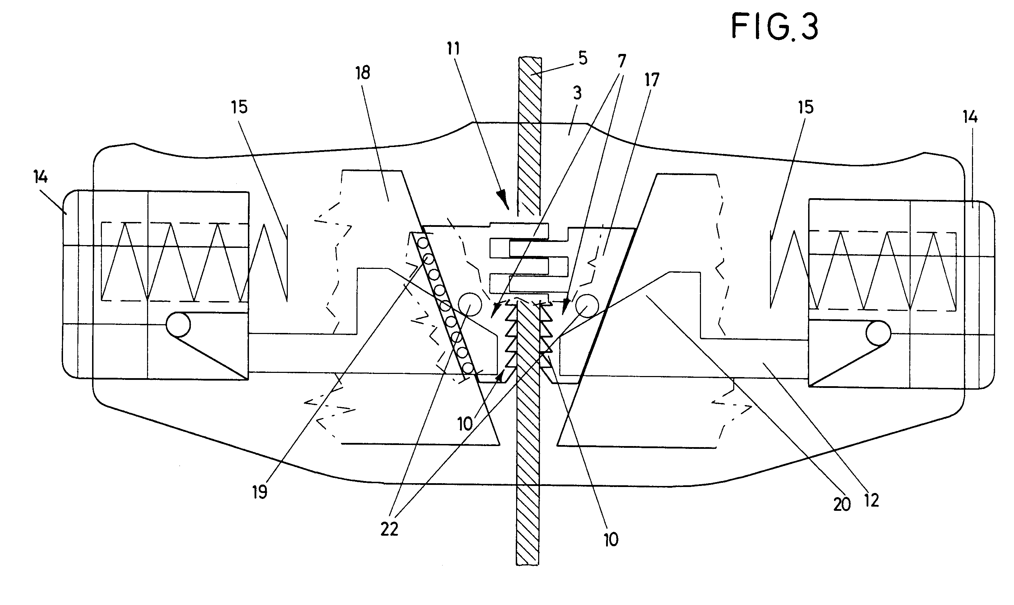

Zwei Ausführungsbeispiele der Erfindung werden anhand der Zeichnungen im folgenden näher erläutert, wobei die Fig. 1 und 3 zwei unterschiedliche Ausführungsbeispiele der Erfindung darstellen und in Fig. 2 die Klemmbacken von Fig. 1 in gegenüber Fig. 1 vergrößertem Maßstab dargestellt sind.

In Fig. 1 ist mit 1 ein Trapezdraht bezeichnet, der zum Mast eines Segelbootes verläuft. An den Trapezdraht 1 schließt sich eine Öse 2 an, die bis zu einem Haltegriff 3 verläuft und mit diesem verbunden ist. Zwischen den beiden Schenkein der Öse 2 ist eine Umlenkrolle 4 vorgesehen, um welche ein Trapezseil 5 geführt ist. Die Gesamtheit dieser Trapezseilanordnung kann in Anlehnung an bekannte Begriffe beispielsweise als Trapeztalje 6 angesprochen werden. Im Gegensatz zu den herkömmlichen Trapeztaljen handelt es sich jedoch lediglich um eine einfache Seilumlenkung und nicht um eine mehrfache flaschenzugartige Seilführung.

Der Haltegriff 3 ist als hohles Gehäuse ausgestaltet, wobei innerhalb dieses Gehäuses zwei Klemmbacken 7 um Schwenkachsen 8 beweglich gelagert sind. Die beiden Klemmbacken 7 werden gegen das Trapezseil 5 beaufschlagt, wobei die Belastungsrichtung des Trapezseiles 5 in der dargestellten Fig. 1 nach unten, also zu einem Trapezbügel 9 gerichtet erfolgt, so daß sich bei Belastung automatisch zunehmend höhere Klemmkräfte entwickeln, die eine zuverlässige Fixierung des Trapezseiles 5 in seiner momentanen Stellung sicherstellen. Die Klemmbacken 7 weisen zu diesem Zweck eine Klemmverzahnung 10 auf, mit der sie auf das Trapezseil 5 einwirken.

Zusätzlich zu der Klemmverzahnung 10 weisen die beiden Klemmbacken 7 eine Synchronverzahnung 11 auf, die im dargestellten Ausführungsbeispiel hinter dem Trapezseil 5 vorgesehen ist und mit der sich die beiden Klemmbacken 7 gegenseitig berühren, so daR eine Schwenkbewegung einer Klemmbacke automatisch eine gegenläufige Schwenkbewegung der zweiten Klemmbacke 7 bewirkt.

Die Klemmbacken 7 werden durch Druckstangen 12 betätigt, welche wiederum durch Drucktasten 14 betätigt sind. Die Drucktasten 14 werden durch Federn 15 nach außen gedrückt, so daß sie über die Kontur des Gehäuses des Handgriffes 3 hinausragen und leicht betätigt werden können. Zudem bewirken die Federn 15 über die Schubstangen 12 einen Druck auf die beiden Klemmbacken 7, um diese - wie oben bereits ausgeführt - gegen das Trapezseil 5 anliegend zu beaufschlagen.

Während das erste Ende des Trapezseiles 5 am Trapezring 9 befestigt ist, wird das zweite Ende des Trapezseiles 5 durch ein Trapezgummi 16 unter Zugspannung gesetzt, so daß keine frei schwingenden Seienden auftreten. Das Trapezgummi 16 spannt das Trapez zudem und hält es bei Nichtbenutzung in einer Ruheposition. Ein freies Schwingen oder Schlagen des freien Endes des Trapezseiles 5 wird auf diese Weise unterbunden.

In Fig. 2 ist der Bereich der Klemmbacken 7 von Fig. 1 in vergrößertem Maßstab dargestellt, wobei zur besseren Übersichtlichkeit das Trapezseil 5 nicht dargestellt ist. Aus Fig. 2 sind die beiden in unterschiedlichen Ebenen angeordneten Verzahnungen der Klemmbacken 7 deutlich erkennbar: Zum einen die in Blickrichtung weiter oben angeordnete Klemmverzahnung 10, die zwischen sich einen Freiraum läßt, der geringer ist als der Durchmesser des verwendeten Trapezseiles und zum anderen die in Blickrichtung unter der Klemmverzahnung 10 liegende Synchronverzahnung 11, die in jeder Stellung der beiden Klemmbacken 7 stets im Eingriff ist, um die gleichzeitige und gegenläufige Bewegung der beiden Klemmbacken 7 sicherzustellen. Mit Hilfe der Synchronverzahnung ist auch bei Betätigung nur einer Drucktaste 14 sichergestellt, daß das Trapezseil 5 gleichmäßig freigegeben bzw. durch die Klemmverzahnung 10 belastet wird.

Aus Fig. 3 ist eine Längenverstellvorrichtung ähnlich der von Fig. 1 entnehmbar: Das Trapezseil 5 ist durch das Gehäuse des Haltegriffes 3 geführt, der die aus Fig. 1 bekannten, durch Federn 15 belasteten Drucktasten 14 aufweist. Die Klemmung erfolgt mittels zweier Schieber 17 und Lagerbacken 18, die schräg verlaufende parallele Flächen aufweisen, wobei die Schieber 17 zum Trapezseil 15 hin die Klemmbacken 7 mit der Klemmverzahnung 10 zur Beaufschlagung des Trapezseiles 15 bilden.

Die Schieber 17 stützen sich auf der vom Trapezseil 5 entfernten Seite an den Lagerbacken 18 ab, welche ihrerseits kraftschlüssig mit dem Gehäuse des Handgriffes 3 verbunden sind. Rollen 19 reduzieren die Reibung zwischen den Schiebern 17 und den Lagerbacken 18, wenn diese aneinander abgleiten.

Sobald das Trapezseil 5 unter Last gerät, verschieben sich die Schieber 17 in Belastungsrichtung, also gemäß der Darstellung von Fig. 2 nach unten. Hierdurch verringert sich der wirksame Abstand zwischen den beiden Schiebern 17, so daß mit zunehmender Belastung des Trapezseiles 5 die Klemmwirkung der Schieber 17 ebenfalls zunimmt.

Die Längenverstellvorrichtung gemäß Fig. 2 kann gelöst werden mit Hilfe von Nasen 22, die sich senkrecht zur Belastungsrichtung über die Schiebern 17 erheben. Löseschieber 20 sind mit den Drucktasten 14 über Druckstangen 12 verbunden. Durch Druck auf die Drucktasten 14 werden die Löseschieber 20 über die Druckstangen 12 zum Trapezseil 5 hin bewegt. Durch eine schräge oder kreissegmentähnliche Fläche an den Löseschiebern 20 werden Nasen 22 der Schieber 17 beaufschlagt und dadurch die Schieber 17 entgegengesetzt zur Belastungsrichtung, also in der Fig. 2 nach oben, geschoben. Hierdurch vergrößert sich der wirksame Abstand zwischen den beiden Schiebern 17.

Durch die Federn 15 werden sowohl die Drucktasten 14 als auch die Löseschieber 20 an ihren Druckstangen 12 nach außen, also vom Trapezseil 5 weg, verschoben, sobald die Drucktasten 14 nicht durch den Segler beaufschlagt werden. Die Schieber 17 sind daher bestrebt, der Schwerkraft folgend ihren wirksamen Abstand zueinander zu verringern und das Trapezseil 5 einzuklemmen, sobald die Drucktasten 14 nicht mehr betätigt werden.

Eine Synchronverzahnung 11 ist zwischen den Schiebern 17 vorgesehen, um deren gleichzeitige und gegenläufige Bewegung zu gewährleisten: Bei einer Aufwärts- oder Abwärtsbewegung eines der Schieber 17 entlang dem Trapezseil 5 wird der jeweils andere Schieber 17 durch die Synchronverzahnung 11 mitgenommen. Aufgrund dieser Bewegung entlang dem Trapezseil 5 findet die beschriebene Querbewegung automatisch ebenfalls statt, um das Trapezseil 5 freizugeben oder festzulegen.

In Fig. 3 weisen die Klemmbacken 7 eine Klemmverzahnung 10 auf, bei der die einzelnen Zähne geradlinig hintereinander angeordnet sind im Gegensatz zu den auf einer gebogenen Linie angeordneten Zähnen der Klemmverzahnung 10 von Fig. 1 und 2. Aufgrund dieser geradlinigen Ausgestaltung der Klemmverzahnung 10 von Fig. 3 wird eine größere Anlagefläche der Klemmverzahnung 10 am Trapezseil 5 bei dem Ausführungsbeispiel gemäß Fig. 3 erzielt. Hierdurch ergibt sich einerseits eine größere wirksame Klemmfläche, so daß der Verschleiß des Trapezseiles 5 bei einer ruckartigen Belastung erheblich verhindert werden kann, bei der ansonsten ggf. der Schotmantel reißen kann. Auch der Dauerverschleiß des Trapezseiles kann bei dieser Klemmverzahnung gemäß Fig. 3 vermindert werden, so daß sich insgesamt eine längere Lebensdauer für das Trapezseil 5 ergibt.

## Patentansprüche

1. Längenverstellvorrichtung für Segelboot-Trapeze, mit einem am freien Ende des Trapezdrahtes (1) befestigten Haltegriff (3) sowie einer im Bereich des Haltegriffes (3) umgelenkten Trapezseilanordnung (6), an deren einem Endbereich der Trapezring (9) befestigt ist, in den der Haken des vom Segler getragenen Trapezgurtes einhängbar ist, und an deren anderem Endbereich ein Gummizug (16) im Sinne einer Verkürzung des ringseitigen Endes der Trapezseilanordnung (6) angreift, und mit einer zwei Klemmbacken (7) aufweisenden, über eine Drucktaste (14) zu öffnenden Klemmvorrichtung (7, 14) zur Fixierung der eingestellten Länge des Trapezseiles (5) dadurch gekennzeichnet,
- daß die Klemmvorrichtung (7, 14) am Haltegriff (3) vorgesehen ist,
- daß die Klemmvorrichtung (7, 14) zwei beweglich gelagerte und in Richtung der Schließbewegung federbelastete Klemmbacken (7) aufweist,
- daß die Drucktaste (14) mit beiden Klemmbacken (7) über Verbindungselemente in Wirkverbindung steht,
- daß der Haltegriff (3) mittels einer eine Umlenkrolle (4) für das Trapezseil (5) aufweisenden Befestigungsvorrichtung (Öse 2) am Trapezdraht (1) befestigt ist,
- und daß das Trapezseil (5) vom Gummizug (16) nach oben zur Umlenkrolle (4) und von dort nach unten durch die Klemmbacken (7) der Klemmvorrichtung (7, 14) geführt ist und am freien unteren Ende den Trapezring (9) aufweist.

2. Längenverstellvorrichtung nach Anspruch 1, dadurch gekennzeichnet, daß zwei Drucktasten (14) vorgesehen sind, die beiderseits des Trapezseiles (5) angeordnet und mit den Klemmbacken (7) durch Druckstangen (12) verbunden sind.

3. Längenverstellvorrichtung nach Anspruch 1 oder 2, dadurch gekennzeichnet, daß die Klemmbacken (7) schwenkbar gelagert sind.

4. Längenverstellvorrichtung nach Anspruch 1 oder 2, dadurch gekennzeichnet, daß die beiden Klemmbacken (7) als Schieber (17) ausgestaltet sind.

5. Längenverstellvorrichtung nach einem der vorhergehenden Ansprüche, dadurch gekennzeichnet, daß die Klemmbacken (7) miteinander zugunsten einer gleichzeitigen Beweglichkeit durch eine Synchronverzahnung (11) verzahnt sind.
